# EUROPEAN PATENT APPLICATION

(11) **EP 2 922 317 A1**
(43) Date of publication of application: **23.09.2015**
(21) Application number: 12889678.4
(22) Date of filing: 06.12.2012
(51) Int. Cl.: H04W 4/24

(54) **SESSION RECOVERY METHOD, DEVICE AND SYSTEM**

(71) Applicant: Huawei Technologies Co., Ltd., Longgang District Shenzhen, Guangdong 518129 (CN)
(72) Inventor: HE, Guangwei, Shenzhen Guangdong 518129 (CN); ZHANG, Jing, Shenzhen Guangdong 518129 (CN); QING, Hua, Shenzhen Guangdong 518129 (CN); WANG, Yufang, Shenzhen Guangdong 518129 (CN)
(74) Representative: Thun, Clemens
(86) International application number: PCT/CN2012/086034
(87) International publication number: WO 2014/086020

(57) **Abstract**

The invention provides a session restoration method, device and system. The method includes: receiving, by a standby PCRF, a CCR-U message sent by a PCEF, where the CCR-U message is sent by the PCEF after determining that a session needs to be updated; and according to the CCR-U message, re-establishing, by the standby PCRF, a session and making a PCC policy decision. According to embodiments of the present invention, signaling interaction overheads can be reduced, and a signaling processing capability of a standby PCRF can be improved.

## Description

### TECHNICAL FIELD

The present invention relates to the field of communications technologies, and in particular, to a session restoration method, device, and system.

### BACKGROUND

In a policy and charging control (Policy and Charging Control, PCC) architecture, a packet switching (Packet Switching, PS) network can detect different service streams and perform quality of service (Quality of Service, QoS) control and charging statistics for the service streams. A PCC system includes a policy and charging enforcement function entity (Policy and Charging Enforcement Function, PCEF) and a policy and charging rule function entity (Policy and Charging Rule Function, PCRF), where an interface between the PCEF and the PCRF is a Gx interface. To improve reliability of the Gx interface, a PCRF active/standby redundancy mode is usually used during actual deployment. During activation procedure of a user, an primary PCRF is preferentially selected to establish a session, and if the primary PCRF is unavailable, a standby PCRF is selected; during user update and deactivation, the PCRF selected during activation is preferentially used, and if the PCRF selected during activation is unavailable, a Gx failover (Failover) procedure is triggered to select the other PCRF.

The primary PCRF and the standby PCRF are usually located in different geographical locations. In the prior art, a real-time hot standby manner is adopted between the primary PCRF and the standby PCRF, for example, real-time signaling interaction is required between the two to ensure data consistency between network elements.

However, the real-time hot standby may increase signaling interactions, which affects a signaling processing capability.

### SUMMARY

In view of this, embodiments of the present invention provide a session restoration method, device and system to resolve a problem in the prior art that a signaling processing capability is poor due to real-time signaling interaction between an primary PCRF and a standby PCRF.

According to a first aspect, a session restoration method is provided, including:
receiving, by a standby PCRF, a CCR-U message sent by a PCEF, where the CCR-U message is sent by the PCEF after determining that a session needs to be updated; and
according to the CCR-U message, re-establishing, by the standby PCRF, a session and making a PCC policy decision.

With reference to the first aspect, in a first possible implementation manner of the first aspect, the CCR-U message includes user information and an original PCC rule, where the original PCC rule is sent by an primary PCRF to the PCEF during an initial establishment procedure of an IP-CAN session or an update procedure of an IP connectivity access network IP-CAN session; and the making a PCC policy decision includes:
determining that the original PCC rule is a PCC rule obtained after the PCC policy decision; or
obtaining a PCC rule according to the user information and subscription information.

With reference to the first possible implementation manner of the first aspect, in a second possible implementation manner of the first aspect, when the PCC rule obtained by the standby PCRF is a new PCC rule different from the original PCC rule, the method further includes:
sending, by the standby PCRF, a Credit Control Answer Update CCA-U message to the PCEF, where the CCA-U message includes the new PCC rule, so that the PCEF performs charging and policy control according to the new PCC rule.

With reference to the first aspect, in a third possible implementation manner of the first aspect, the CCR-U message includes user information; the making a PCC policy decision includes: obtaining a PCC rule according to the user information and subscription information; and obtaining session restoration instruction information according to configuration information, where the session restoration instruction information is used to instruct the PCEF to maintain or modify an original bearer and policy; and
the method further includes:
sending, by the standby PCRF, a CCA-U message to the PCEF, where the CCA-U message includes the session restoration instruction information.

With reference to the third possible implementation manner of the first aspect, in a fourth possible implementation manner of the first aspect, when the session restoration instruction information is used to instruct the PCEF to modify the original bearer and policy, the CCA-U message further includes the PCC rule obtained by the standby PCRF, so that the PCEF deactivates all dedicated bearers after receiving the CCA-U message, and replaces an original PCC rule on a default bearer with the PCC rule obtained by the standby PCEF.

According to a second aspect, a session restoration method is provided, including:
determining, by a PCEF, that a session needs to be updated; and
sending, by the PCEF, a CCR-U message to a standby PCRF, so that according to the CCR-U message, the standby PCRF re-establishes a session and makes a PCC policy decision.

With reference to the second aspect, in a first possible implementation manner of the second aspect, the method further includes:
receiving, by the PCEF, an original PCC rule that is sent by an primary PCRF during an initial establishment procedure of an IP connectivity access network IP-CAN session or an update procedure of an IP-CAN session; and
the sending, by the PCEF, a CCR-U message to a standby PCRF, so that according to the CCR-U message, the standby PCRF re-establishes a session and makes a PCC policy decision includes:
   sending, by the PCEF, the CCR-U message to the standby PCRF, where the CCR-U message includes user information and the original PCC rule, so that the standby PCRF re-establishes the session according to the user information, and determines that the original PCC rule is a PCC rule obtained after the PCC policy decision, or obtains a PCC rule according to the user information and subscription information.

With reference to the first possible implementation manner of the second aspect, in a second possible implementation manner of the second aspect, when the PCC rule obtained by the standby PCRF is different from the original PCC rule of the PCEF, the method further includes:
receiving, by the PCEF, a Credit Control Answer Update CCA-U message sent by the standby PCRF, where the CCA-U message includes the PCC rule obtained by the standby PCRF, and performing charging and policy control according to the PCC rule obtained by the standby PCRF.

With reference to the second aspect, in a third possible implementation manner of the second aspect, the sending, by the PCEF, a CCR-U message to a standby PCRF, so that according to the CCR-U message, the standby PCRF re-establishes a session and makes a PCC policy decision includes:
sending, by the PCEF, the CCR-U message to the standby PCRF, where the CCR-U message includes user information, so that the standby PCRF re-establishes the session according to the user information, obtains a PCC rule according to the user information and subscription information, and obtains session restoration instruction information according to configuration information, where the session restoration instruction information is used to instruct the PCEF to maintain or modify an original bearer and policy; and
the method further includes:
   receiving, by the PCEF, a CCA-U message sent by the standby PCRF, where the CCA-U message includes the session restoration instruction information.

With reference to the third possible implementation manner of the second aspect, in a fourth possible implementation manner of the second aspect, when the session restoration instruction information is used to instruct the PCEF to modify the original bearer and policy, the CCA-U message further includes the PCC rule obtained by the standby PCRF; and the method further includes:
deactivating, by the PCEF, all dedicated bearers after receiving the CCA-U message, and replacing an original PCC rule on a default bearer with the PCC rule obtained by the standby PCEF.

According to a third aspect, a session restoration device is provided, including:
a receiving module, configured to receive a CCR-U message sent by a PCEF; and
a processing module, configured to, according to the CCR-U message, re-establish a session and make a PCC policy decision.

With reference to the third aspect, in a first possible implementation manner of the third aspect, the CCR-U message includes user information and an original PCC rule, where the original PCC rule is sent by an primary PCRF to the PCEF during an initial establishment procedure of an IP connectivity access network IP-CAN session or an update procedure of an IP-CAN session; and the processing module is specifically configured to:
determine that the original PCC rule is a PCC rule obtained after the PCC policy decision; or
obtain a PCC rule according to the user information and subscription information.

With reference to the first possible implementation manner of the third aspect, in a second possible implementation manner of the third aspect, when the PCC rule obtained by the standby PCRF is a new PCC rule different from the original PCC rule, the device further includes:
a sending module, configured to send a Credit Control Answer Update CCA-U message to the PCEF, where the CCA-U message includes the new PCC rule, so that the PCEF performs charging and policy control according to the new PCC rule.

With reference to the third aspect, in a third possible implementation manner of the third aspect, the CCR-U message includes user information; the processing module is specifically configured to: obtain a PCC rule and session restoration instruction information according to the user information and subscription information, where the session restoration instruction information is used to instruct the PCEF to maintain or modify an original bearer and policy; and the device further includes:
a sending module, configured to send a CCA-U message to the PCEF, where the CCA-U message includes the session restoration instruction information.

With reference to the third possible implementation manner of the third aspect, in a fourth possible implementation manner of the third aspect, when the session restoration instruction information is used to instruct the PCEF to modify the original bearer and policy, the sending module is specifically configured to:
send a CCA-U message to the PCEF, where the CCA-U message includes the session restoration instruction information and the PCC rule obtained by the standby PCRF, so that the PCEF deactivates all dedicated bearers after receiving the CCA-U message, and replaces an original PCC rule on a default bearer with the PCC rule obtained by the standby PCEF.

According to a fourth aspect, a session restoration device is provided, including:
a determining module, configured to determine that a session needs to be updated; and
a sending module, configured to send a CCR-U message to a standby PCRF, so that according to the CCR-U message, the standby PCRF re-establishes a session and makes a PCC policy decision.

With reference to the fourth aspect, in a first possible implementation manner of the fourth aspect, the device further includes:
a first receiving module, configured to receive an original PCC rule that is sent by an primary PCRF during an initial establishment procedure of an IP connectivity access network IP-CAN session or an update procedure of an IP-CAN session; where
the sending module is specifically configured to: send the CCR-U message to the standby PCRF, where the CCR-U message includes user information and the original PCC rule, so that the standby PCRF re-establishes the session according to the user information, and determines that the original PCC rule is a PCC rule obtained after the PCC policy decision, or obtains a PCC rule according to the user information and subscription information.

With reference to the first possible implementation manner of the fourth aspect, in a second possible implementation manner of the fourth aspect, when the PCC rule obtained by the standby PCRF is different from the original PCC rule of the PCEF, the device further includes:
a third receiving module, configured to receive a Credit Control Answer Update CCA-U message sent by the standby PCRF, where the CCA-U message includes the PCC rule obtained by the standby PCRF, and perform charging and policy control according to the PCC rule obtained by the standby PCRF.

With reference to the fourth aspect, in a third possible implementation manner of the fourth aspect, the sending module is specifically configured to:
send a CCR-U message to the standby PCRF, where the CCR-U message includes user information, so that the standby PCRF re-establishes a session according to the user information, obtains a PCC rule according to the user information and subscription information, and obtains session restoration instruction information according to configuration information, where the session restoration instruction information is used to instruct the PCEF to maintain or modify an original bearer and policy; and
the device further includes:
   a fourth receiving module, configured to receive a CCA-U message sent by the standby PCRF, where the CCA-U message includes the session restoration instruction information.

With reference to the third possible implementation manner of the fourth aspect, in a fourth possible implementation manner of the fourth aspect, when the session restoration instruction information is used to instruct the PCEF to modify the original bearer and policy, the CCA-U message further includes the PCC rule obtained by the standby PCRF; and the device further includes:
a processing module, configured to deactivate all dedicated bearers after the CCA-U message is received, and replace an original PCC rule on a default bearer with the PCC rule obtained by the standby PCEF.

According to a fifth aspect, a session restoration system is provided, including:
a PCEF, configured to send a CCR-U message after determining that a session needs to be updated; and
a standby PCRF, configured to, according to the CCR-U message, re-establish a session and make a PCC policy decision.

With reference to the fifth fourth aspect, in a first possible implementation manner of the fifth aspect, the PCEF is specifically configured to: send the CCR-U message after determining that the session needs to be updated, where the CCR-U message includes user information and an original PCC rule, and the original PCC rule is sent to the PCEF by an primary PCRF during an initial establishment procedure of an IP connectivity access network IP-CAN session or an update procedure of an IP-CAN session; and
the standby PCRF is specifically configured to: re-establish the session according to the user information, and determine that the original PCC rule is a PCC rule obtained after the PCC policy decision; or obtain a PCC rule according to the user information and subscription information.

With reference to the first possible implementation manner of the fifth aspect, in a second possible implementation manner of the fifth aspect, when the PCC rule obtained by the standby PCRF is different from the original PCC rule, the standby PCRF is further configured to: send a Credit Control Answer Update CCA-U message to the PCEF, where the CCA-U message includes the new PCC rule, so that the PCEF performs charging and policy control according to the new PCC rule.

With reference to the fifth aspect, in a third possible implementation manner of the fifth aspect, the PCEF is specifically configured to: send the CCR-U message after determining that the session needs to be updated, where the CCR-U message includes user information; and
the standby PCRF is specifically configured to: re-establish the session according to the user message; obtain a PCC rule according to the user information and subscription information; obtain session restoration instruction information according to configuration information, where the session restoration instruction information is used to instruct the PCEF to maintain or modify an original bearer and policy; and send a CCA-U message to the PCEF, where the CCA-U message includes the session restoration instruction information.

With reference to the third possible implementation manner of the fifth aspect, in a fourth possible implementation manner of the fifth aspect, when the session restoration instruction information is used to instruct the PCEF to modify the original bearer and policy, the CCA-U message further includes the PCC rule obtained by the standby PCRF; and the PCEF is further configured to: deactivate all dedicated bearers after receiving the CCA-U message, and replace an original PCC rule on a default bearer with the PCC rule obtained by the standby PCRF.

According to the foregoing technical solutions, after a PCEF sends a CCR-U message to a standby PCRF, according to the CCR-U message, the standby PCRF re-establishes a session and makes a PCC policy decision, and an primary PCRF does not need to perform hot standby for the standby PCRF in real time, thereby reducing signaling interaction and improving a signaling processing capability of the standby PCRF.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a schematic flowchart diagram of a session restoration method according to an embodiment of the present invention;
FIG. 2 is a schematic flowchart diagram of a session restoration method according to another embodiment of the present invention;
FIG. 3 is a schematic flowchart diagram of a session restoration method according to another embodiment of the present invention;
FIG. 4 is a schematic flowchart diagram of a session restoration method according to another embodiment of the present invention;
FIG. 5 is a schematic structural diagram of a session restoration device according to an embodiment of the present invention;
FIG. 6 is a schematic structural diagram of a session restoration device according to another embodiment of the present invention; and
FIG. 7 is a schematic structural diagram of a session restoration system according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

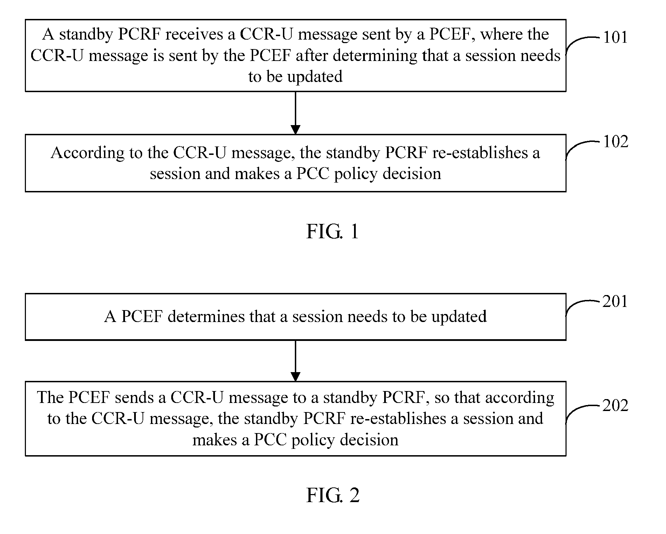

FIG. 1 is a schematic flowchart diagram of a session restoration method according to an embodiment of the present invention. In this embodiment, the executive body is a standby PCRF, and this embodiment includes:

101. The standby PCRF receives a Credit Control Request Update (Credit Control Request Update, CCR-U) message sent by a PCEF, where the CCR-U message is sent by the PCEF after determining that a session needs to be updated.

102. According to the CCR-U message, the standby PCRF re-establishes a session and makes a PCC policy decision.

Correspondingly, a procedure performed by the PCEF is shown in Fig. 2 and includes:
201. The PCEF determines that a session needs to be updated.
202. The PCEF sends a CCR-U message to the standby PCRF, so that according to the CCR-U message, the standby PCRF re-establishes a session and makes a PCC policy decision.

A condition for a PCEF to determine that a session needs to be updated may be: an IP-CAN session update request sent by an access network is received, or an internal timer times out, or the like.

Optionally, the PCEF may add user information and an original PCC rule to the CCR-U message to be sent to the standby PCRF; after receiving the CCR-U message, the standby PCRF may re-establish the session according to the user information and determine that the original PCC rule is a PCC rule obtained after the standby PCRF makes the PCC policy decision, or, the standby PCRF may obtain a PCC rule according to the user information and subscription information, where the obtained PCC rule may be the same as or different from the original PCC rule. The original PCC rule may be sent by an primary PCRF to the PCEF during an initial establishment procedure of an IP connectivity access network (IP-Connectivity Access Network, IP-CAN) session, or the original PCC rule may be an updated PCC rule on an primary PCRF, that is, may be sent by the primary PCRF to the PCEF during an update procedure of an IP-CAN session. A session in this embodiment of the present invention refers to an IP-CAN session.

Correspondingly, when the PCC rule obtained by the standby PCRF is the same as the original PCC rule sent by the PCEF, the standby PCRF may only send a response message, namely a CCA-U message, to the PCEF, where the CCA-U message may carry no PCC rule, and when receiving the CCA-U message, the PCEF still uses the original PCC rule to perform charging and policy control. When the PCC rule obtained by the standby PCRF is different from the original PCC rule sent by the PCEF, the CCA-U message sent by the standby PCRF to the PCEF may carry a new PCC rule, and then the PCEF performs charging and policy control according to the new PCC rule.

Optionally, the PCEF may not send the original PCC rule to the standby PCRF; instead, the standby PCRF re-establishes the session according to the user information in the CCR-U message, performs the PCC policy decision according to the user information and the subscription information to obtain a PCC rule, and obtains session restoration instruction information according to configuration information, where the PCC rule may be the same as or different from the original PCC rule of the PCEF, the subscription information may be locally configured on the PCRF or obtained from another device, and the configuration information may be locally configured on the PCRF. The session restoration instruction information is used to indicate a manner used by the PCEF to process an original bearer and policy, for example, keeping the original bearer and policy unchanged, or deactivating a dedicated bearer and removing a default bearer policy. For detailed information, refer to the following embodiments.

In this embodiment, after a PCEF sends a CCR-U message to a standby PCRF, according to the CCR-U message, the standby PCRF re-establishes a session and makes a PCC policy decision, and an primary PCRF does not need to perform hot standby for the standby PCRF in real time, thereby reducing signaling interaction and improving a signaling processing capability of the standby PCRF.

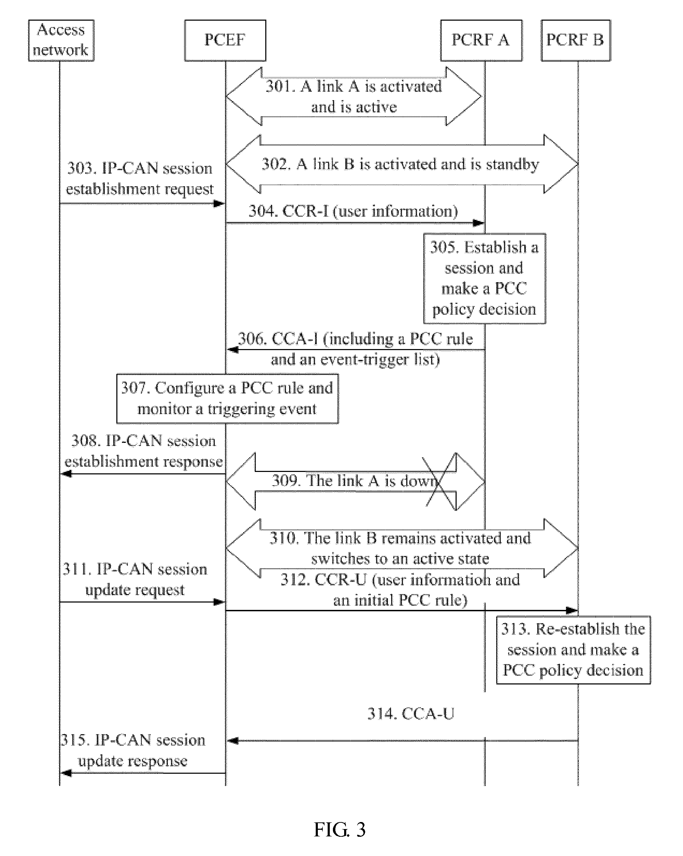

FIG. 3 is a schematic flowchart diagram of a session restoration method according to another embodiment of the present invention. The method includes:
301. A link A between a PCEF and a PCRF A is activated and is active.
302. A link B between the PCEF and a PCRF B is activated and is standby.
303. An access network sends an IP-CAN session establishment request to the PCEF.
304. The PCEF sends a Credit Control Request Initial (Credit Control Request Initial, CCR-I) message to the PCRF A, where the message carries user information.
305. The PCRF A establishes a session and makes a PCC policy decision.
306. The PCRF A sends a Credit Control Answer Initial (Credit Control Answer Initial, CCA-I) message to the PCEF, where the message includes a PCC rule and an event trigger (event-Trigger) list.
307. The PCEF installs the PCC rule and monitors a triggering event.

The PCC rule in 306 and 307 may be an initial PCC rule.

308. The PCEF sends an IP-CAN session establishment response to the access network.

Up to now, initial establishment of an IP-CAN session is completed. For details about the foregoing steps, refer to the prior art.

309. The link A between the PCEF and the PCRF A is down (link A down).

310. The link B between the PCEF and the PCRF B remains activated and switches to an active state.

311. The access network sends an IP-CAN session update request to the PCEF.

312. The PCEF sends a CCR-U message to the PCRF B, where the message includes user information and an initial PCC rule.

Similar to the prior art, when a link on an primary PCRF is down, an active link between a PCRF and a PCEF is switched to a standby PCRF. In the prior art, to ensure data consistency between the primary PCRF and the standby PCRF, the PCRF A not only reports the initial PCC rule to the PCEF, but also sends the initial PCC rule to the standby PCRF, which means real-time hot standby is required between the primary PCRF and the standby PCRF.

A difference from the prior art is that in this embodiment, real-time hot standby is not required between the primary PCRF and the standby PCRF, that is, the PCRF A can send the initial PCC rule to the PCEF only, not to the PCRF B. When the IP-CAN session needs to be updated, the PCEF sends the initial PCC rule to the PCRF B.

313. The PCRF B re-establishes the session and makes a PCC policy decision.

The PCRF B may determine, according to the user information in the CCR-U message, whether to store corresponding session information. If there is no corresponding session information, the PCRF B re-establishes the session according to the user information. A specific principle of establishing a session may be the same as a principle of establishing, by the PCRF A, a session according to the user information in the CCR-I message.

The PCC policy decision made by the PCRF B may include: determining that the initial PCC rule included in the CCR-U message is a PCC rule on the PCRF B; or the PCRF B makes a new PCC policy decision according to the user information and the subscription information, to obtain a new PCC rule. A specific principle of making a PCC policy decision may be the same as a principle of making, by the PCRF A, a PCC policy decision after receiving the CCR-I message. Furthermore, because the PCRF B is in an update procedure, the user information carried in the CCR-U may be different from the user information carried in the CCR-I, a new PCC rule obtained by the PCRF B may be different from the initial PCC rule.

When the PCRF B uses the initial PCC rule, it can be ensured that policy information of a user remains unchanged, thereby ensuring that service experience of the user remains unchanged.

314. The PCRF B sends a Credit Control Answer Update (Credit Control Answer Update, CCA-U) message to the PCEF.

Optionally, if the PCRF B determines, after making the PCC policy decision, that the initial PCC rule is used, the PCRF B can feed back the CCA-U message to the PCEF only, where the CCA-U message does not carry a PCC rule and is used only as a response message; after receiving the CCA-U message, the PCEF keeps an original bearer and policy unchanged, that is, continues to use the initial PCC rule to perform charging and policy control; or,
optionally, if the PCRF B determines a new PCC rule after making the PCC policy decision, the PCRF B may send the new PCC rule to the PCEF, and the PCEF performs charging and policy control according to the new PCC rule.

315. The PCEF sends an IP-CAN session update response to the access network.

In this embodiment, that the PCEF reports the initial PCC rule to the PCRF B is used as an example. It may be understood that a Gx failover may also occur in a scenario in which a PCC rule on a PCEF has been updated, and the PCC rule is not the initial PCC rule. For example, if the update procedure has already occurred between the PCEF and the PCRF A, the PCC rule sent by the PCEF to the PCRF B in 312 is the updated PCC rule, that is, the original PCC rule of the PCEF. Then a PCC rule used by the PCRF B may be the original PCC rule or the new PCC rule obtained after the new PCC policy decision is made.

In this embodiment, a PCEF sends an initial PCC rule to a standby PCRF, so that session restoration can be implemented on the standby PCRF without real-time hot standby between an primary PCRF and the standby PCRF, so as to reduce signaling overheads.

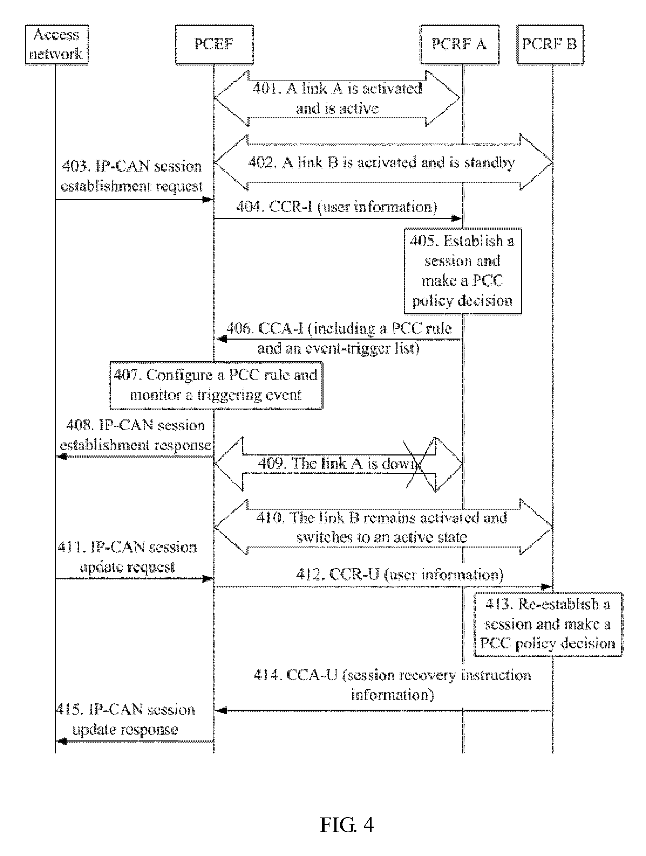

FIG. 4 is a schematic flowchart diagram of a session restoration method according to another embodiment of the present invention. The method includes:
401. A link A between a PCEF and a PCRF A is activated and is active.
402. A link B between the PCEF and a PCRF B is activated and is standby.
403. An access network sends an IP-CAN session establishment request to the PCEF.
404. The PCEF sends a CCR-I message to the PCRF A, where the message carries user information.
405. The PCRF A establishes a session and makes a PCC policy decision.
406. The PCRF A sends a CCA-I to the PCEF, where the message includes a PCC rule and an event-trigger (event-Trigger) list.
407. The PCEF installs the PCC rule and monitors a triggering event.

The PCC rule in 406 and 407 may be an initial PCC rule.

408. The PCEF sends an IP-CAN session establishment response to the access network.

409. The link A between the PCEF and the PCRF A is down (link A down).

410. The link B between the PCEF and the PCRF B remains activated and switches to an active state (link B active).

411. The access network sends an IP-CAN session update request to the PCEF.

For details about steps 401 to 411, refer to steps 301 to 311, and details are not described herein again.

412. The PCEF sends a CCR-U message to the PCRF B, where the message includes user information.

A difference from the foregoing embodiment is that in this embodiment, the PCEF does not need to send a PCC rule to the PCRF B; instead, the PCRF B makes a decision.

413. PCRF B re-establishes the session and makes a PCC policy decision.

The PCRF B may determine, according to the user information in the CCR-U message, whether to store corresponding session information. If there is no corresponding session information, the PCRF B re-establishes the session according to the user information. A specific principle of establishing a session may be the same as a principle of establishing, by the PCRF A, a session according to the user information in the CCR-I message.

The PCC policy decision made by the PCRF B may include: making a new PCC policy decision according to the user information and subscription information, to obtain a new PCC rule. A specific principle of making a PCC policy decision may be the same as a principle of making, by the PCRF A, a PCC policy decision after receiving the CCR-I message. Furthermore, because the PCRF B is in an update procedure, the user information carried in the CCR-U may be different from the user information carried in the CCR-I, a new PCC rule obtained by the PCRF B may be different from the initial PCC rule.

414. The PCRF B sends a CCA-U to the PCEF, where the CCA-U includes session restoration instruction information.

The session restoration instruction information is used to indicate a processing manner for an original bearer and policy.

For example, a value of the session restoration instruction information may be as follows:
0: The PCEF keeps an original bearer and policy unchanged. In this case, the CCA-U message may carry only the session restoration instruction information and not carry a PCC rule, so as to instruct the PCEF to keep a current bearer and a PCC rule of each bearer unchanged. For example, the PCEF uses the initial PCC rule to perform charging and policy control.
1: The PCEF deactivates all dedicated bearers and replaces a policy on a default bearer with a new PCC rule determined by the PCRF B. In this case, the CCA-U message further needs to carry the new PCC rule obtained by the PCRF B, and replace a current policy on a current default bearer with the new PCC rule, for example replacing the initial PCC rule. In this scenario, because the default bearer is reserved, it can be ensured that a user remains connected.

It may be understood that an original PCC rule on the PCEF may be the foregoing initial PCC rule, or may be an updated PCC rule.

Furthermore, in different systems, a dedicated bearer may also be referred to as secondary Packet Data Protocol (Packet Data Protocol, PDP) and a default bearer may also be referred to as primary PDP.

415. The PCEF sends an IP-CAN session update response to the access network.

In this embodiment, a standby PCRF re-establishes a session and makes a PCC policy decision after receiving a CCR-U message, so that session restoration can be implemented on the standby PCRF without real-time hot standby between an primary PCRF and the standby PCRF, thereby reducing signaling interaction and improving a signaling processing capability of the standby PCRF.

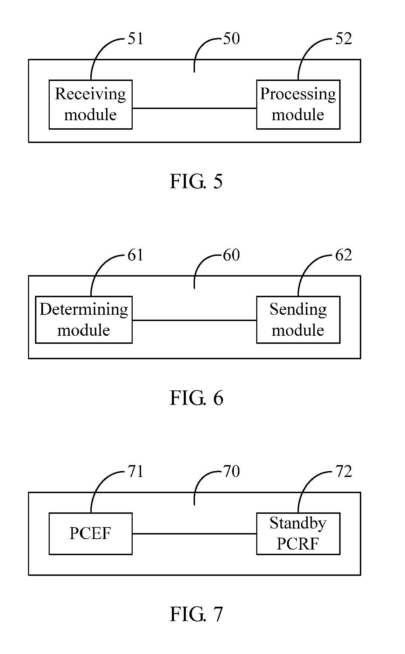

FIG. 5 is a schematic structural diagram of a session restoration device according to an embodiment of the present invention, where the device may be a standby PCRF or located in a standby PCRF. The device 50 includes a receiving module 51 and a processing module 52, where the receiving module 51 is configured to receive a CCR-U message sent by a PCEF, where the CCR-U message is sent by the PCEF after determining that a session needs to be updated; and the processing module 52 is configured to, according to the CCR-U message, re-establish a session and make a PCC policy decision.

Optionally, the CCR-U message includes user information and an original PCC rule, where the original PCC rule is sent by an primary PCRF to the PCEF during an initial establishment procedure of an IP-CAN session or an update procedure of an IP-CAN session; and the processing module is specifically configured to:
determine that the original PCC rule is a PCC rule obtained after the PCC policy decision; or
obtain a PCC rule according to the user information and subscription information.

Optionally, when the PCC rule obtained by the standby PCRF is different from the original PCC rule, the device further includes:
a sending module, configured to send a CCA-U message to the PCEF, where the CCA-U message includes the new PCC rule, so that the PCEF performs charging and policy control according to the new PCC rule.

Optionally, the CCR-U message includes user information; the processing module is specifically configured to: obtain a PCC rule according to the user information and subscription information, and obtain session restoration instruction information according to configuration information, where the session restoration instruction information is used to instruct the PCEF to maintain or modify an original bearer and policy; and the device further includes:
a sending module, configured to send a CCA-U message to the PCEF, where the CCA-U message includes the session restoration instruction information.

Optionally, when the session restoration instruction information is used to instruct the PCEF to modify the original bearer and policy, the sending module is specifically configured to:
send a CCA-U message to the PCEF, where the CCA-U message includes the session restoration instruction information and the PCC rule obtained by the standby PCRF, so that the PCEF deactivates all dedicated bearers after receiving the CCA-U message, and replaces an original PCC rule on a default bearer with the PCC rule obtained by the standby PCEF.

In this embodiment, after a PCEF sends a CCR-U message to a standby PCRF, according to the CCR-U message, the standby PCRF re-establishes a session and makes a PCC policy decision, and an primary PCRF does not need to perform hot standby for the standby PCRF in real time, thereby reducing signaling interaction and improving a signaling processing capability of the standby PCRF.

FIG. 6 is a schematic structural diagram of a session restoration device according to another embodiment of the present invention, where the device may be a PCEF or located in a PCEF. The device 60 includes a determining module 61 and a sending module 62, where the determining module 61 is configured to determine that a session needs to be updated; and the sending module 62 is configured to send a CCR-U message to a standby PCRF, so that according to the CCR-U message, the standby PCRF re-establishes a session and makes a PCC policy decision.

Optionally, the device further includes:
a first receiving module, configured to receive an original PCC rule that is sent by an primary PCRF during an initial establishment procedure of an IP-CAN session or an update procedure of an IP-CAN session, where
the sending module is specifically configured to: send the CCR-U message to the standby PCRF, where the CCR-U message includes user information and the original PCC rule, so that the standby PCRF re-establishes the session according to the user information, and determines that the original PCC rule is a PCC rule obtained after the PCC policy decision, or obtains a PCC rule according to the user information and subscription information.

Optionally, when the PCC rule obtained by the standby PCRF is different from the original PCC rule of the PCEF, the device further includes:
a second receiving module, configured to receive a CCA-U message sent by the standby PCRF, where the CCA-U message includes the PCC rule obtained by the standby PCRF, and perform charging and policy control according to the PCC rule obtained by the standby PCRF.

Optionally, the sending module is specifically configured to:
send the CCR-U message to the standby PCRF, where the CCR-U message includes user information, so that the standby PCRF re-establishes the session according to the user information, obtains a PCC rule according to the user information and subscription information, and obtains session restoration instruction information according to configuration information, where the session restoration instruction information is used to instruct the PCEF to maintain or modify an original bearer and policy; and
the device further includes:
   a third receiving module, configured to receive a CCA-U message sent by the standby PCRF, where the CCA-U message includes the session restoration instruction information.

Optionally, when the session restoration instruction information is used to instruct the PCEF to modify the original bearer and policy, the CCA-U message further includes the PCC rule obtained by the standby PCRF; and the device further includes:
a processing module, configured to deactivate all dedicated bearers after the CCA-U message is received, and replace an original PCC rule on a default bearer with the PCC rule obtained by the standby PCEF.

In this embodiment, after a PCEF sends a CCR-U message to a standby PCRF, according to the CCR-U message, the standby PCRF re-establishes a session and makes a PCC policy decision, and an primary PCRF does not need to perform hot standby for the standby PCRF in real time, thereby reducing signaling interaction and improving a signaling processing capability of the standby PCRF.

FIG. 7 is a schematic structural diagram of a session restoration system according to an embodiment of the present invention. The system 70 includes a PCEF 71 and a standby PCRF 72, where the PCEF 71 is configured to send a CCR-U message after determining that a session needs to be updated; and the standby PCRF 72 is configured to, according to the CCR-U message, re-establish a session and perform a PCC policy decision.

Optionally, the PCEF is specifically configured to: send the CCR-U message after determining that the session needs to be updated, where the CCR-U message includes user information and an original PCC rule, and the original PCC rule is sent to the PCEF by an primary PCRF during an initial establishment procedure of an IP-CAN session or an update procedure of an IP-CAN session; and
the standby PCRF is specifically configured to: re-establish the session according to the user message, and determine that the original PCC rule is a PCC rule obtained after the PCC policy decision; or obtain a PCC rule according to the user information and subscription information.

Optionally, when the PCC rule obtained by the standby PCRF is different from the original PCC rule, the standby PCRF is further configured to: send a CCA-U message to the PCEF, where the CCA-U message includes the new PCC rule, so that the PCEF performs charging and policy control according to the new PCC rule.

Optionally, the PCEF is specifically configured to: send the CCR-U message after receiving an IP-CAN session update request sent by an access network, where the CCR-U message includes user information; and
the standby PCRF is specifically configured to: re-establish the session according to the user message; obtain a PCC rule according to the user information and subscription information; obtain session restoration instruction information according to configuration information, where the session restoration instruction information is used to instruct the PCEF to maintain or modify an original bearer and policy; and send a CCA-U message to the PCEF, where the CCA-U message includes the session restoration instruction information.

Optionally, when the session restoration instruction information is used to instruct the PCEF to modify the original bearer and policy, the CCA-U message further includes the PCC rule obtained by the standby PCRF; and the PCEF is further configured to: deactivate all dedicated bearers after receiving the CCA-U message, and replace an original PCC rule on a default bearer with the PCC rule obtained by the standby PCEF.

In this embodiment, after a PCEF sends a CCR-U message to a standby PCRF, according to the CCR-U message, the standby PCRF re-establishes a session and makes a PCC policy decision, and an primary PCRF does not need to perform hot standby for the standby PCRF in real time, thereby reducing signaling interaction and improving a signaling processing capability of the standby PCRF.

It may be clearly understood by a person skilled in the art that, for the purpose of convenient and brief description, division of the foregoing function modules is taken as an example for illustration. In actual application, the foregoing functions can be allocated to different modules and implemented according to a requirement, that is, an inner structure of a device is divided into different function modules to implement all or part of the functions described above. For a detailed working process of the foregoing system, device, and unit, reference may be made to a corresponding process in the foregoing method embodiments, and details are not described herein again.

In the several embodiments provided in the present application, it should be understood that the disclosed system, device, and method may be implemented in other manners. For example, the described device embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present application, but not for limiting the present application. Although the present application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present application.

## Claims

1. A session restoration method, comprising:
receiving, by a standby policy and charging rule function entity PCRF, a Credit Control Request Update CCR-U message sent by a policy and charging enforcement function entity PCEF, wherein the CCR-U message is sent by the PCEF after determining that a session needs to be updated; and
according to the CCR-U message, re-establishing, by the standby PCRF, a session and making a policy and charging control PCC policy decision.

2. The method according to claim 1, wherein the CCR-U message comprises user information and an original PCC rule, wherein the original PCC rule is sent by an primary PCRF to the PCEF during an initial establishment procedure of an IP-CAN session or an update procedure of an IP connectivity access network IP-CAN session; and the making a PCC policy decision comprises:
determining that the original PCC rule is a PCC rule obtained after the PCC policy decision; or
obtaining a PCC rule according to the user information and subscription information.

3. The method according to claim 2, wherein when the PCC rule obtained by the standby PCRF is a new PCC rule different from the original PCC rule, the method further comprises:
sending, by the standby PCRF, a Credit Control Answer Update CCA-U message to the PCEF, wherein the CCA-U message comprises the new PCC rule, so that the PCEF performs charging and policy control according to the new PCC rule.

4. The method according to claim 1, wherein the CCR-U message comprises user information, and the making a PCC policy decision comprises: obtaining a PCC rule according to the user information and subscription information; and obtaining session restoration instruction information according to configuration information, wherein the session restoration instruction information is used to instruct the PCEF to maintain or modify an original bearer and policy; and the method further comprises:
sending, by the standby PCRF, a CCA-U message to the PCEF, wherein the CCA-U message comprises the session restoration instruction information.

5. The method according to claim 4, wherein
when the session restoration instruction information is used to instruct the PCEF to modify the original bearer and policy, the CCA-U message further comprises the PCC rule obtained by the standby PCRF, so that the PCEF deactivates all dedicated bearers after receiving the CCA-U message, and replaces an original PCC rule on a default bearer with the PCC rule obtained by the standby PCEF.

6. A session restoration method, comprising:
determining, by a policy and charging enforcement function entity PCEF, that a session needs to be updated; and
sending, by the PCEF, a Credit Control Request Update CCR-U message to a standby policy and charging rule function entity PCRF, so that according to the CCR-U message, a session is re-established and a policy and charging control PCC policy decision is made by the standby PCRF.

7. The method according to claim 6, further comprising:
receiving, by the PCEF, an original PCC rule that is sent by an primary PCRF during an initial establishment procedure of an IP connectivity access network IP-CAN session or an update procedure of an IP-CAN session; and
the sending, by the PCEF, a CCR-U message to a standby PCRF, so that according to the CCR-U message, the standby PCRF re-establishes a session and makes a PCC policy decision comprises:
sending, by the PCEF, the CCR-U message to the standby PCRF, wherein the CCR-U message comprises user information and the original PCC rule, so that the standby PCRF re-establishes the session according to the user information, and determines that the original PCC rule is a PCC rule obtained after the PCC policy decision, or obtains a PCC rule according to the user information and subscription information.

8. The method according to claim 7, wherein when the PCC rule obtained by the standby PCRF is different from the original PCC rule of the PCEF, the method further comprises:
receiving, by the PCEF, a Credit Control Answer Update CCA-U message sent by the standby PCRF, wherein the CCA-U message comprises the PCC rule obtained by the standby PCRF, and performing charging and policy control according to the PCC rule obtained by the standby PCRF.

9. The method according to claim 6, wherein the sending, by the PCEF, a CCR-U message to a standby PCRF, so that according to the CCR-U message, the standby PCRF re-establishes a session and makes a PCC policy decision comprises:
sending, by the PCEF, the CCR-U message to the standby PCRF, wherein the CCR-U message comprises user information, so that the standby PCRF re-establishes the session according to the user information, obtains a PCC rule according to the user information and subscription information, and obtains session restoration instruction information according to configuration information, wherein the session restoration instruction information is used to instruct the PCEF to maintain or modify an original bearer and policy; and
the method further comprises:
receiving, by the PCEF, a CCA-U message sent by the standby PCRF, wherein the CCA-U message comprises the session restoration instruction information.

10. The method according to claim 9, wherein when the session restoration instruction information is used to instruct the PCEF to modify the original bearer and policy, the CCA-U message further comprises the PCC rule obtained by the standby PCRF; and the method further comprises:
deactivating, by the PCEF, all dedicated bearers after receiving the CCA-U message, and replacing an original PCC rule on a default bearer with the PCC rule obtained by the standby PCEF.

11. A session restoration device, comprising:
a receiving module, configured to receive a Credit Control Request Update CCR-U message sent by a policy and charging enforcement function entity PCEF, wherein the CCR-U message is sent by the PCEF after determining that a session needs to be updated; and
a processing module, configured to, according to the CCR-U message, re-establish a session and make a Credit Control Request Update PCC policy decision.

12. The device according to claim 11, wherein the CCR-U message comprises user information and an original PCC rule, wherein the original PCC rule is sent by an primary PCRF to the PCEF during an initial establishment procedure of an IP connectivity access network IP-CAN session or an update procedure of an IP-CAN session; and the processing module is specifically configured to:
determine that the original PCC rule is a PCC rule obtained after the PCC policy decision; or
obtain a PCC rule according to the user information and subscription information.

13. The device according to claim 12, wherein when the PCC rule obtained by the standby PCRF is a new PCC rule different from the original PCC rule, the device further comprises:
a sending module, configured to send a Credit Control Answer Update CCA-U message to the PCEF, wherein the CCA-U message comprises the new PCC rule, so that the PCEF performs charging and policy control according to the new PCC rule.

14. The device according to claim 11, wherein the CCR-U message comprises user information; the processing module is specifically configured to: obtain a PCC rule and session restoration instruction information according to the user information and subscription information, wherein the session restoration instruction information is used to instruct the PCEF to maintain or modify an original bearer and policy; and the device further comprises:
a sending module, configured to send a CCA-U message to the PCEF, wherein the CCA-U message comprises the session restoration instruction information.

15. The device according to claim 14, wherein when the session restoration instruction information is used to instruct the PCEF to modify the original bearer and policy, the sending module is specifically configured to:
send a CCA-U message to the PCEF, wherein the CCA-U message comprises the session restoration instruction information and the PCC rule obtained by the standby PCRF, so that the PCEF deactivates all dedicated bearers after receiving the CCA-U message, and replaces an original PCC rule on a default bearer with the PCC rule obtained by the standby PCEF.

16. A session restoration device, comprising:
a determining module, configured to determine that a session needs to be updated; and
a sending module, configured to send a Credit Control Request Update CCR-U message to a standby policy and charging rule function entity PCRF, so that according to the CCR-U message, a session is re-established and a policy and charging control PCC policy decision is made by the standby PCRF.

17. The device according to claim 16, further comprising:
a first receiving module, configured to receive an original PCC rule that is sent by an primary PCRF during an initial establishment procedure of an IP connectivity access network IP-CAN session or an update procedure of an IP-CAN session; wherein
the sending module is specifically configured to: send the CCR-U message to the standby PCRF, wherein the CCR-U message comprises user information and the original PCC rule, so that the standby PCRF re-establishes the session according to the user information, and determines that the original PCC rule is a PCC rule obtained after the PCC policy decision, or obtains a PCC rule according to the user information and subscription information.

18. The device according to claim 17, wherein when the PCC rule obtained by the standby PCRF is different from the original PCC rule of the PCEF, the device further comprises:
a third receiving module, configured to receive a Credit Control Answer Update CCA-U message sent by the standby PCRF, wherein the CCA-U message comprises the PCC rule obtained by the standby PCRF, and perform charging and policy control according to the PCC rule obtained by the standby PCRF.

19. The device according to claim 16, wherein the sending module is specifically configured to:
send the CCR-U message to the standby PCRF, wherein the CCR-U message comprises user information, so that the standby PCRF re-establishes the session according to the user information, obtains a PCC rule according to the user information and subscription information, and obtains session restoration instruction information according to configuration information, wherein the session restoration instruction information is used to instruct the PCEF to maintain or modify an original bearer and policy; and
the device further comprises:
a fourth receiving module, configured to receive a CCA-U message sent by the standby PCRF, wherein the CCA-U message comprises the session restoration instruction information.

20. The device according to claim 19, wherein when the session restoration instruction information is used to instruct the PCEF to modify the original bearer and policy, the CCA-U message further comprises the PCC rule obtained by the standby PCRF; and the device further comprises:
a processing module, configured to deactivate all dedicated bearers after the CCA-U message is received, and replace an original PCC rule on a default bearer with the PCC rule obtained by the standby PCEF.

21. A session restoration system, comprising:
a policy and charging enforcement function entity PCEF, configured to send a Credit Control Request Update CCR-U message after determining that a session needs to be updated; and
a standby policy and charging rule function entity PCRF, configured to, according to the CCR-U message, re-establish a session and make a PCC policy decision.

22. The system according to claim 21, wherein
the PCEF is specifically configured to: send the CCR-U message after determining that the session needs to be updated, wherein the CCR-U message comprises user information and an original PCC rule, and the original PCC rule is sent to the PCEF by an primary PCRF during an initial establishment procedure of an IP connectivity access network IP-CAN session or an update procedure of an IP-CAN session; and
the standby PCRF is specifically configured to: re-establish the session according to the user information, and determine that the original PCC rule is a PCC rule obtained after the PCC policy decision; or obtain a PCC rule according to the user information and subscription information.

23. The system according to claim 22, wherein when the PCC rule obtained by the standby PCRF is a new PCC rule different from the original PCC rule, the standby PCRF is further configured to: send a Credit Control Answer Update CCA-U message to the PCEF, wherein the CCA-U message comprises the new PCC rule, so that the PCEF performs charging and policy control according to the new PCC rule.

24. The system according to claim 21, wherein
the PCEF is specifically configured to: send the CCR-U message after determining that the session needs to be updated, wherein the CCR-U message comprises user information; and
the standby PCRF is specifically configured to: re-establish the session according to the user message; obtain a PCC rule according to the user information and subscription information; obtain session restoration instruction information according to configuration information, wherein the session restoration instruction information is used to instruct the PCEF to maintain or modify an original bearer and policy; and send a CCA-U message to the PCEF, wherein the CCA-U message comprises the session restoration instruction information.

25. The system according to claim 24, wherein when the session restoration instruction information is used to instruct the PCEF to modify the original bearer and policy, the CCA-U message further comprises the PCC rule obtained by the standby PCRF; and the PCEF is further configured to: deactivate all dedicated bearers after receiving the CCA-U message, and replace an original PCC rule on a default bearer with the PCC rule obtained by the standby PCRF.
